Europäisches Patentamt

European Patent Office (11) Publication number: **0 278 339**

Office européen des brevets **A1**

## (12) EUROPEAN PATENT APPLICATION

(21) Application number: **88101300.7**

(22) Date of filing: **29.01.88**

(51) Int. Cl.4: **B62D 33/08 , B60P 3/42**

(30) Priority: **06.02.87 IT 1928287**

(43) Date of publication of application:
**17.08.88 Bulletin 88/33**

(84) Designated Contracting States:
**AT BE CH DE ES FR GB GR IT LI LU NL SE**

(71) Applicant: **Tanzi, Silvano**
**Via Stefanardo 14**
**I-20059 Vimercate Milan(IT)**

(72) Inventor: **Tanzi, Silvano**
**Via Stefanardo 14**
**I-20059 Vimercate Milan(IT)**

(74) Representative: **Giambrocono, Alfonso, Dr.**
**Ing. et al**
**Ing. A. Giambrocono & C. S.r.l. Via Rosolino**
**Pilo 19/B**
**I-20129 Milano(IT)**

(54) **Vehicle with collapsible tanks for transporting liquid loads,and a mobile floor for transporting solid loads as an alternative to liquid loads.**

(57) The vehicle (1) comprises, on its frame (2), at least one collapsible tank (6) of yieldable impermeable material of elastic or equivalent type, a floor (10) overlying said tank (6) and means associated with said floor (10) for moving this latter from a lowered position in which said tank (6) is loaded, and viceversa.

Fig. 2

EP 0 278 339 A1

## Vehicle with collapsible tanks for transporting liquid loads, and a mobile floor for transporting solid loads as an alternative to liquid loads

This industrial invention patent relates to a vehicle for transporting liquid loads and, alternatively, solid loads.

In the present context, the term "vehicle" signifies any selfpropelled or towed land-based means of transport, the term "liquid load" signifies any pumpable loads including pulverulent products and the like, and the term "solid load" signifies any load which can be loaded either in the loose or packaged state.

Liquid loads are currently transported on land in road tankers or rail tankers, which can normally be used only for the outward journey as such use on the return journey would require the same type of load for transportation. For example, road and rail tankers are used for transporting petroleum derivatives from their production site to their place of use, whereas they make the return journey empty because the said place of use does not normally comprises production plants. This negatively affects transport costs.

Even if production plants for liquid products are installed at the place of use, the rail or road tanker must undergo long and costly cleaning and washing procedures. These procedures however are not always sufficient to allow the return transportation of loads having characteristics which are completely different from the products loaded for the outward journey.

An object of the present invention is to provide a vehicle which can be used profitably both on the outward journey and on the return journey.

This and further objects of the invention will be apparent to experts of the art on reading the description and claims given hereinafter.

The vehicle according to the invention is essentially characterized by comprising, on its frame, at least one collapsible tank of yieldable impermeable material of elastic or equivalent type, a floor overlying said tank and means associated with said floor for moving this latter from a lowered position on which said tank is unloaded and collapsed, to a raised position in which said tank is loaded, and viceversa.

The vehicle of the invention is illustrated by way of example in the figures of the accompanying drawings in which:

- Figure 1 shows a semitrailer provided with three loaded tanks;
- Figure 2 is a rear view of the semitrailer of Figure 1;
- Figure 3 shows the same semitrailer with the three tanks unloaded and collapsed; and

- Figure 4 is a rear view of the semitrailer of Figure 3.

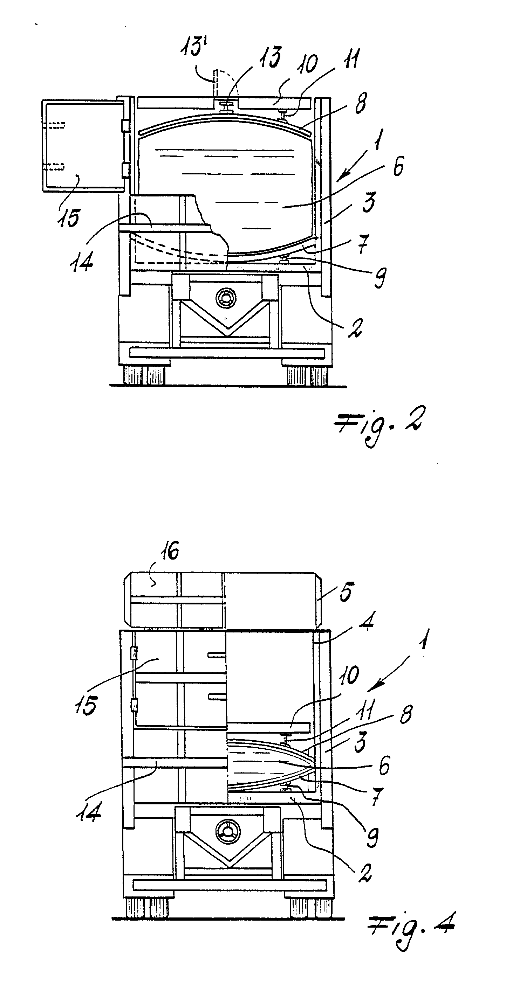

In said figures, the semitrailer indicated overall by the reference numeral 1 comprises in the conventional manner a frame 2 provided laterally with main side panels 3 to which supplementary sidepieces 5 are hinged at 4 (Figures 3 and 4).

Three tanks 6 of yieldable impermeable material such as rubber or fabric are mounted on the frame 2 and each cooperates with a shaped lower plate 7 and upper plate 8 acting as reinforcement elements.

As shown in Figures 2 and 4, each lower plate 7 is rigidly joined to the frame 2 by means of longitudinal members 9, and each upper plate 8 is rigidly joined by means of longitudinal members 11 to a floor 10 overlying the tanks 6.

The floor is connected to the frame 2 by a plurality of hydraulic or pneumatic pistons, not shown in the figures, which are positioned along the semitrailer 1 immediately adjacent to the side panels 3. Instead of the pistons it is possible to use any other means able to move the floor 10 from a raised position to a lowered position and viceversa.

A telescopic dividing wall 12 is preferably provided between one tank 6 and the next.

Feed valves 13 provided with a door which closes in line with the floor 10 enable liquid to be fed into the tanks 6, and conventional discharge valves, not shown, allow it to be discharged.

The rear of the semitrailer 1 is provided with a tail wall 14 fitted upperly with a door 15 comprising a rotatable panel 16.

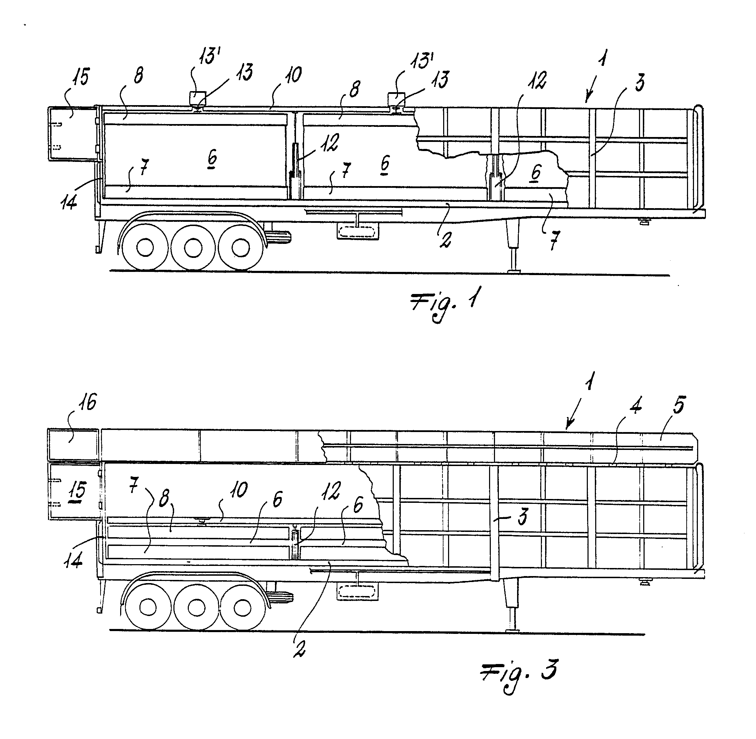

From the aforegoing it is apparent that the semitrailer can be used for transporting a liquid load during one journey, for example the outward journey, by pumping said load into the expandable tanks 6 while the floor 10 is raised above the frame 2 (Figures 1 and 2). For the return journey the floor 10 is lowered onto the tanks 6 which are now in a discharged and collapsed state (Figures 3 and 4), and any type of solid load is then loaded onto said floor.

## Claims

1. A vehicle (1), characterized by comprising, on its frame (2) at least one collapsible tank (6) of yieldable impermeable material of elastic or equivalent type, a floor (10) overlying said tank (6) and means associated with said floor (10) for moving this latter from a lowered position in which said tank is unloaded and collapsed, to a raised position in which said tank (6) is loaded, and viceversa.

2. A vehicle as claimed in claim 1, characterized in that said tank (6) is supported lowerly by a shaped plate (8) rigid with said frame (2) and cooperates upperly with a shaped plate (7) rigid with the underside of said floor (10).

3. A vehicle as claimed in the preceding claims, characterized in that said means associated with said floor (10) for moving this latter into its raised and lowered positions consist advantageously of hydraulic or pneumatic pistons.

4. A vehicle as claimed in the preceding claims, characterized by comprising, if more that one tank is present, a telescopic wall (12) between one tank (6) and the next.

Fig. 1

Fig. 3

0 278 339

Fig. 2

Fig. 4

European Patent
Office

**EUROPEAN SEARCH REPORT**

Application Number

EP 88 10 1300

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-3 346 162 (SCHRÖDER) <br> * page 10, line 11 - page 11, line 3; figures 1, 3 * <br> --- | 1,3 | B 62 D 33/08 <br> B 60 P 3/42 |
| A | DE-C- 969 901 (KROLL) <br> * page 3, lines 53-63; figure 2 * <br> --- | 2 | |
| A | PATENT ABSTRACTS OF JAPAN, vol. 9, no. 34 (M-357)[1757], 14th February 1985; & JP - A - 59 176 132 (SHINMEIWA KOGYO) 05-10-1984 <br> ----- | | |

|  |
|---|
| TECHNICAL FIELDS SEARCHED (Int. Cl.4) |
| B 62 D 33/00 <br> B 60 P 3/00 |

The present search report has been drawn up for all claims

| Place of search | Date of completion of the search | Examiner |
|---|---|---|
| BERLIN | 20-04-1988 | LUDWIG H J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)